# EUROPEAN PATENT APPLICATION

(11) **EP 3 396 759 A1**
(43) Date of publication of application: **31.10.2018**
(21) Application number: 16877994.0
(22) Date of filing: 20.12.2016
(51) Int. Cl.: H01M 8/04, C01B 3/38, H01M 8/0612, H01M 8/10

(54) **FUEL CELL SYSTEM**

(30) Priority: 25.12.2015 JP 2015253883
(71) Applicant: Panasonic Intellectual Property Management Co., Ltd., Osaka-shi, Osaka 540-6207 (JP)
(72) Inventor: MORI, Yoshihiro, Osaka-shi Osaka 540-6207 (JP); YASUDA, Shigeki, Osaka-shi Osaka 540-6207 (JP); KINOSHITA, Hiroshi, Osaka-shi Osaka 540-6207 (JP); URATA, Takayuki, Osaka-shi Osaka 540-6207 (JP)
(74) Representative: Grünecker Patent- und Rechtsanwälte PartG mbB
(86) International application number: PCT/JP2016/005196
(87) International publication number: WO 2017/110090

(57) **Abstract**

Fuel cell system (100) includes: fuel cell (1); combustor (2); exhaust heat recovery passage (3); anode exhaust gas passage (4) through which an anode exhaust gas is supplied from fuel cell (1) to combustor (2); anode exhaust gas heat exchanger (5) that is disposed in a middle of anode exhaust gas passage (4), cools the anode exhaust gas by heat exchange between the anode exhaust gas and an exhaust heat recovery medium, and condenses moisture contained in the anode exhaust gas; vapor-liquid separator (6) that separates the anode exhaust gas cooled by anode exhaust gas heat exchanger (5) into a condensed water component and a gas component; and heat exchange unit (9) that performs the heat exchange between the anode exhaust gas flowing through a first part of anode exhaust gas passage (4) located upstream of anode exhaust gas heat exchanger (5) and downstream of fuel cell (1), and the anode exhaust gas flowing through a second part of anode exhaust gas passage (4) located upstream of combustor (2) and downstream of the vapor-liquid separator (6).

## Description

### TECHNICAL FIELD

The present disclosure relates to a fuel cell system including a fuel cell that generates power using a hydrogen-containing gas and an oxidant gas and a combustor that burns an anode exhaust gas discharged from the fuel cell.

### BACKGROUND ART

For example, in a polymer electrolyte fuel cell, hydrogen is used as fuel during generating operation. Means for supplying hydrogen necessary for the generating operation is not developed as infrastructure, so that usually a hydrogen generator is attached to the fuel cell system.

The hydrogen generator includes a reformer filled with a reforming catalyst for generating a reformed gas containing hydrogen from a raw material gas (hydrocarbon) and water by a steam reforming reaction and the combustor that generates a flue gas for heating the reforming catalyst to a temperature suitable for the steam reforming reaction.

The hydrogen-containing anode exhaust gas, which is discharged from the fuel cell without being consumed in the fuel cell, is used as the fuel for the combustor that generates the flue gas.

The anode exhaust gas usually contains steam in a saturated state in addition to hydrogen. Consequently, the condensation of the steam in the anode exhaust gas is prevented as much as possible such that an anode exhaust gas passage through which the anode exhaust gas flows between the fuel cell and the combustor is thermally insulated.

However, even if such thermal insulation treatment is performed on the anode exhaust gas passage, a temperature (about 70°C to about 80°C) at the anode exhaust gas is higher than ambient temperature, so that heat of the anode exhaust gas is hardly prevented from radiating in an external atmosphere. Consequently, part of the steam in the saturated state is inevitably condensed. Fine water drops generated by the condensation of the steam is introduced to the combustor along with a flow of the anode exhaust gas while floating in the anode exhaust gas.

When the water drops are mixed into the combustor, a calorific value of latent heat of vaporization for vaporizing the water drops is consumed in the combustor, so that thermal efficiency of the hydrogen generator is degraded. Additionally, a combustion state of the fuel gas in the combustor easily becomes unstable due to existence of the water drops, and possibly a flame of the combustor goes out.

There has been proposed a technique of cooling the anode exhaust gas, condensing moisture contained in the anode exhaust gas, separating and removing a condensed water component from the anode exhaust gas, and heating and supplying the anode exhaust gas to the combustor by heat exchange with the flue gas generated by the combustor (for example, see PTL 1).

However, in the conventional configuration, the anode exhaust gas supplied to the combustor is heated by the heat exchange with the flue gas generated by the combustor, so that there is a possibility that the anode exhaust gas is extremely heated enough to prevent the generation of the water drops in the anode exhaust gas introduced to the combustor. In this case, because a temperature at the flue gas is largely lowered by the heat exchange with the anode exhaust gas, the calorific value that can be recovered from the flue gas through an exhaust heat recovery medium decreases in the case that exhaust heat of the flue gas is recovered by the exhaust heat recovery medium and used in hot-water supply or the like.

### Citation List

### Patent Literature

PTL 1: Unexamined Japanese Patent Publication No. 2005-50798

### SUMMARY OF THE INVENTION

In order to solve the above problem, the present disclosure provides a fuel cell system that can decrease the possibility of generating the water drops in the anode exhaust gas introduced to the combustor without degrading efficiency of the exhaust heat recovery by the exhaust heat recovery medium, and improve combustion stability of the anode exhaust gas in the combustor.

According to one aspect of the present disclosure, a fuel cell system includes a fuel cell that generates power using a hydrogen-containing gas and an oxidant gas, a combustor that burns an anode exhaust gas discharged from the fuel cell, an exhaust heat recovery passage through which an exhaust heat recovery medium that recovers exhaust heat is passed, and an anode exhaust gas passage through which the anode exhaust gas is supplied from the fuel cell to the combustor. The fuel cell system includes an anode exhaust gas heat exchanger, which is disposed in the middle of the anode exhaust gas passage and cools the anode exhaust gas to condense moisture contained in the anode exhaust gas by heat exchange between the anode exhaust gas and the exhaust heat recovery medium, and a vapor-liquid separator that separates the anode exhaust gas cooled by the anode exhaust gas heat exchanger into a condensed water component and a gas component. The fuel cell system includes a condensed water tank that stores the condensed water component separated by the vapor-liquid separator and a flue gas heat exchanger that recovers the exhaust heat from the flue gas by the heat exchange between the flue gas generated by the combustor and the exhaust heat recovery medium. The fuel cell system includes a heat exchange unit that performs the heat exchange between the anode exhaust gas flowing through a first part of the anode exhaust gas passage located upstream of the anode exhaust gas heat exchanger and downstream of the fuel cell, and the anode exhaust gas flowing through a second part of the anode exhaust gas passage located upstream of the combustor and downstream of the vapor-liquid separator.

In the above configuration, the anode exhaust gas discharged from the fuel cell is cooled by the heat exchange with the anode exhaust gas flowing through the anode exhaust gas passage located upstream of the combustor and downstream of the vapor-liquid separator in the heat exchange unit, and further cooled by the heat exchange with the exhaust heat recovery medium in the anode exhaust gas heat exchanger. Consequently, the moisture contained in the anode exhaust gas is condensed, the condensed water component is separated and removed from the anode exhaust gas by the vapor-liquid separator, and the condensed water component separated from the gas component of the anode exhaust gas by the vapor-liquid separator is stored in the condensed water tank.

On the other hand, the anode exhaust gas in which the condensed water component is removed by the vapor-liquid separator is heated by the heat exchange with the anode exhaust gas flowing through the anode exhaust gas passage located upstream of the anode exhaust gas heat exchanger and downstream of the fuel cell in the heat exchange unit. Consequently, the anode exhaust gas is supplied to the combustor while the fine water drops associated with the anode exhaust gas are surely removed.

Thus, the fuel cell system of the present disclosure can properly deal with the conventional problem that the combustion state of the combustor becomes unstable due to the water drops associated with the anode exhaust gas, decrease the possibility of generating the water drops in the anode exhaust gas introduced to the combustor, and improve combustion stability of the anode exhaust gas in the combustor.

The exhaust heat recovery medium can recover the exhaust heat from the flue gas in the flue gas heat exchanger, and recover the exhaust heat from the anode exhaust gas in the anode exhaust gas heat exchanger.

In the anode exhaust gas heat exchanger, the calorific value that can be recovered from the anode exhaust gas decreases slightly by providing the heat exchange unit in the anode exhaust gas passage located upstream of the anode exhaust gas heat exchanger and downstream of the fuel cell as compared with the case that the heat exchange unit is not provided. However, the temperature of the anode exhaust gas supplied to the combustor is raised by providing the heat exchange unit in the anode exhaust gas passage located upstream of the combustor and downstream of the vapor-liquid separator as compared with the case that the heat exchange unit is not provided. The exhaust heat of the flue gas generated in the combustor is recovered by the exhaust heat recovery medium in the flue gas heat exchanger, so that the decrease in calorific value that can be recovered from the anode exhaust gas by the anode exhaust gas heat exchanger is not a problem.

Generally the temperature of the anode exhaust gas discharged from the fuel cell is lower than the temperature of the flue gas discharged from the combustor. However, in order to properly deal with the conventional problem that the combustion state of the combustor becomes unstable due to the water drops associated with the anode exhaust gas, the anode exhaust gas may be supplied to the combustor while heated higher than the temperature at which the steam in the anode exhaust gas is condensed. Consequently, even if the moisture is not separated and removed in the middle of the anode exhaust gas passage, it is not necessary to heat the anode exhaust gas to a temperature higher than or equal to the temperature of the anode exhaust gas discharged from the fuel cell.

When the anode exhaust gas discharged from the fuel cell is cooled by the heat exchange unit and the anode exhaust gas heat exchanger, the moisture contained in the anode exhaust gas is condensed, and the condensed water component is separated and removed from the anode exhaust gas by the vapor-liquid separator. The anode exhaust gas heat exchanger cools the anode exhaust gas, which allows a sufficient temperature difference to be generated between the anode exhaust gas flowing through the anode exhaust gas passage located upstream of the anode exhaust gas heat exchanger and downstream of the fuel cell and the anode exhaust gas flowing through the anode exhaust gas passage located upstream of the combustor and downstream of the vapor-liquid separator. For this reason, even in the configuration in which the anode exhaust gas supplied to the combustor is heated, the temperature of the anode exhaust gas supplied to the combustor can be set higher than the temperature at which the steam in the anode exhaust gas is condensed by the heat exchange with the anode exhaust gas discharged from the fuel cell.

In the case that the anode exhaust gas supplied to the combustor is heated by the heat exchange with the anode exhaust gas discharged from the fuel cell, efficiency of recovering the exhaust heat of the fuel cell system using the exhaust heat recovery medium is high, and the heat exchange unit can simply be constructed at low cost as compared with the case that the anode exhaust gas supplied to the combustor is heated by the heat exchange with the flue gas discharged from the combustor.

Therefore, the possibility of generating the water drops in the anode exhaust gas introduced to the combustor can be decreased without degrading the efficiency of the exhaust heat recovery by the exhaust heat recovery medium, and the combustion stability of the anode exhaust gas in the combustor can be improved.

As described above, the fuel cell system of the present disclosure can decrease the possibility of generating the water drops in the anode exhaust gas introduced to the combustor without degrading the efficiency of the exhaust heat recovery by the exhaust heat recovery medium, and improve the combustion stability of the anode exhaust gas in the combustor.

### BRIEF DESCRIPTION OF DRAWINGS

FIG. 1 is a block diagram illustrating a schematic configuration of a fuel cell system according to a first exemplary embodiment of the present disclosure.
FIG. 2 is a schematic diagram illustrating an example of a configuration of a heat exchange unit in the fuel cell system of the first exemplary embodiment of the present disclosure.
FIG. 3 is a schematic diagram illustrating an example of a configuration of a vapor-liquid separator in the fuel cell system of the first exemplary embodiment of the present disclosure.
FIG. 4 is a schematic diagram illustrating another example of the configuration of the vapor-liquid separator in the fuel cell system of the first exemplary embodiment of the present disclosure.

### DESCRIPTION OF EMBODIMENT

According to a first aspect of the present disclosure, a fuel cell system includes a fuel cell that generates power using a hydrogen-containing gas and an oxidant gas, a combustor that burns an anode exhaust gas discharged from the fuel cell, an exhaust heat recovery passage through which an exhaust heat recovery medium that recovers exhaust heat is passed, and an anode exhaust gas passage through which the anode exhaust gas is supplied from the fuel cell to the combustor. The fuel cell system also includes an anode exhaust gas heat exchanger, which is disposed in the middle of the anode exhaust gas passage and cools the anode exhaust gas to condense moisture contained in the anode exhaust gas by heat exchange between the anode exhaust gas and the exhaust heat recovery medium, and a vapor-liquid separator that separates the anode exhaust gas cooled by the anode exhaust gas heat exchanger into a condensed water component and a gas component. The fuel cell system also includes a condensed water tank that stores the condensed water component separated by the vapor-liquid separator and a flue gas heat exchanger that recovers the exhaust heat from the flue gas by the heat exchange between the flue gas generated by the combustor and the exhaust heat recovery medium. The fuel cell system also includes a heat exchange unit that performs the heat exchange between the anode exhaust gas flowing through a first part of the anode exhaust gas passage located upstream of the anode exhaust gas heat exchanger and downstream of the fuel cell, and the anode exhaust gas flowing through a second part of the anode exhaust gas passage located upstream of the combustor and downstream of the vapor-liquid separator.

In this configuration, the anode exhaust gas discharged from the fuel cell is cooled by the heat exchange with the anode exhaust gas flowing through the anode exhaust gas passage located upstream of the combustor and downstream of the vapor-liquid separator in the heat exchange unit, and further cooled by the heat exchange with the exhaust heat recovery medium in the anode exhaust gas heat exchanger. The moisture contained in the anode exhaust gas is condensed, the condensed water component is separated and removed from the anode exhaust gas by the vapor-liquid separator, and the condensed water component separated from the gas component of the anode exhaust gas by the vapor-liquid separator is stored in the condensed water tank.

On the other hand, the anode exhaust gas in which the condensed water component is removed by the vapor-liquid separator is heated by the heat exchange with the anode exhaust gas flowing through the anode exhaust gas passage located upstream of the anode exhaust gas heat exchanger and downstream of the fuel cell in the heat exchange unit. Consequently, the anode exhaust gas is supplied to the combustor while the fine water drops associated with the anode exhaust gas are surely removed.

Thus, the fuel cell system of the present disclosure can properly deal with the conventional problem that the combustion state of the combustor becomes unstable due to the water drops associated with the anode exhaust gas, decrease the possibility of generating the water drops in the anode exhaust gas introduced to the combustor, and improve combustion stability of the anode exhaust gas in the combustor.

The exhaust heat recovery medium can recover the exhaust heat from the flue gas in the flue gas heat exchanger, and recover the exhaust heat from the anode exhaust gas in the anode exhaust gas heat exchanger.

In the anode exhaust gas heat exchanger, the calorific value that can be recovered from the anode exhaust gas decreases slightly by providing the heat exchange unit in the anode exhaust gas passage located upstream of the anode exhaust gas heat exchanger and downstream of the fuel cell as compared with the case that the heat exchange unit is not provided. However, the temperature of the anode exhaust gas supplied to the combustor is raised by providing the heat exchange unit in the anode exhaust gas passage located upstream of the combustor and downstream of the vapor-liquid separator as compared with the case that the heat exchange unit is not provided. For this reason, the exhaust heat of the flue gas generated by the combustor is recovered by the exhaust heat recovery medium in the flue gas heat exchanger. Accordingly, the decrease in calorific value that can be recovered from the anode exhaust gas by the anode exhaust gas heat exchanger is not a problem.

Generally the temperature of the anode exhaust gas discharged from the fuel cell is lower than the temperature of the flue gas discharged from the combustor. In order to properly deal with the conventional problem that the combustion state of the combustor becomes unstable due to the water drops associated with the anode exhaust gas, the anode exhaust gas may be supplied to the combustor while heated higher than the temperature at which the steam in the anode exhaust gas is condensed. Even if the moisture is not separated and removed in the middle of the anode exhaust gas passage, it is not necessary to heat the anode exhaust gas to a temperature higher than or equal to the temperature of the anode exhaust gas discharged from the fuel cell.

When the anode exhaust gas discharged from the fuel cell is cooled by the heat exchange unit and the anode exhaust gas heat exchanger, the moisture contained in the anode exhaust gas is condensed, and the condensed water component is separated and removed from the anode exhaust gas by the vapor-liquid separator. The anode exhaust gas heat exchanger cools the anode exhaust gas, which allows a sufficient temperature difference to be generated between the anode exhaust gas flowing through the anode exhaust gas passage located upstream of the anode exhaust gas heat exchanger and downstream of the fuel cell and the anode exhaust gas flowing through the anode exhaust gas passage located upstream of the combustor and downstream of the vapor-liquid separator. Thus, even in the configuration in which the anode exhaust gas supplied to the combustor is heated by the heat exchange with the anode exhaust gas discharged from the fuel cell, the temperature of the anode exhaust gas supplied to the combustor can be set higher than the temperature at which the steam in the anode exhaust gas is condensed.

For this reason, in the case that the anode exhaust gas supplied to the combustor is heated by the heat exchange with the anode exhaust gas discharged from the fuel cell, efficiency of recovering the exhaust heat of the fuel cell system using the exhaust heat recovery medium is high, and the heat exchange unit can simply be constructed at low cost as compared with the case that the anode exhaust gas supplied to the combustor is heated by the heat exchange with the flue gas discharged from the combustor.

Therefore, the possibility of generating the water drops in the anode exhaust gas introduced to the combustor can be decreased without degrading the efficiency of the exhaust heat recovery by the exhaust heat recovery medium, and the combustion stability of the anode exhaust gas in the combustor can be improved.

In a second aspect of the present disclosure, the heat exchange unit of the first aspect may include a first piping constituting the first part of the anode exhaust gas passage located upstream of the anode exhaust gas heat exchanger and downstream of the fuel cell and a second piping constituting the second part of the anode exhaust gas passage located upstream of the combustor and downstream of the vapor-liquid separator, the first piping and the second piping may be in contact with each other.

According to this configuration, in the heat exchange unit, the first piping constituting the anode exhaust gas passage located upstream of the anode exhaust gas heat exchanger and downstream of the fuel cell and the second piping constituting the anode exhaust gas passage located upstream of the combustor and downstream of the vapor-liquid separator are in contact with each other. Consequently, the heat exchange can be performed between the first piping and the second piping of the heat exchange unit by direct heat conduction, and the state in which the first piping and the second piping are in contact with each other can be maintained using a bundling component such as a bundling tie. Thus, the simple configuration of the heat exchange between the first piping and the second piping of the heat exchange unit contributes to cost reduction of the fuel cell system.

In a third aspect of the present disclosure, the heat exchange unit of the second aspect may include a heat insulator that covers both the first piping and the second piping.

According to this configuration, the heat of (the anode exhaust gas flowing through) the first piping and the heat of (the anode exhaust gas flowing through) the second piping of the heat exchange unit are radiated to outside air while the state in which the first piping and the second piping of the heat exchange unit are in contact with each other is maintained by the heat insulator. Thus, (the anode exhaust gas flowing through) the first piping and (the anode exhaust gas flowing through) the second piping of the heat exchange unit can be prevented from being cooled by the outside air. Accordingly, the heat of (the anode exhaust gas flowing through) the first piping of the heat exchange unit can more surely be transferred to (the anode exhaust gas flowing through) the second piping of the heat exchange unit without waste and at low cost, the anode exhaust gas flowing through the second piping can be heated to prevent the fine water drops from being generated in the anode exhaust gas supplied to the combustor.

The heat insulator covers both the first piping and the second piping of the heat exchange unit while the first piping and the second piping of the heat exchange unit are in contact with each other, so that the heat insulator can maintain the state in which the first piping and the second piping of the heat exchange unit are in contact with each other even if bundling using a bundling component such as a bundling tie is eliminated, or even if the bundling using the bundling component such as the bundling tie is temporarily performed.

In a fourth aspect of the present disclosure, the heat exchange unit of the second or third aspect may be configured such that the anode exhaust gas in the first piping in the heat exchange unit flows downward, and such that the anode exhaust gas in the second piping in the heat exchange unit flows upward.

According to this configuration, even if the condensed water is generated in the first piping of the heat exchange unit, the condensed water can be moved downward by gravity and a flow of the anode exhaust gas in the first piping, and the condensed water can be prevented from disturbing the flow of the anode exhaust gas in the first piping. Even if the condensed water flows in the second piping of the heat exchange unit, the gravity can prevent the condensed water from flowing in the combustor, and the condensed water remaining in the second piping of the heat exchange unit can be removed by the heat transferred from the first piping of the heat exchange unit.

A length of the contact between the first piping and the second piping of the heat exchange unit can be lengthened by arranging the first piping and the second piping of the heat exchange unit in substantially parallel (including parallel). Thus, the heat exchange between the first piping and the second piping of the heat exchange unit can sufficiently be performed in the heat exchange unit by adjusting the length of the portion in which the first piping and the second piping are in contact with each other.

In a fifth aspect of the present disclosure, the fuel cell and the combustor of any one of the first to fourth aspects may be located above the vapor-liquid separator, the heat exchange unit of any one of the first to fourth aspects may be located above the vapor-liquid separator, and the anode exhaust gas heat exchanger of any one of the first to fourth aspects may be located below the heat exchange unit and above the vapor-liquid separator.

According to this configuration, the condensed water condensed by the anode exhaust gas passage is introduced to the vapor-liquid separator using the gravity, and the condensed water can be prevented from disturbing the flow of the anode exhaust gas. The first piping constituting the anode exhaust gas passage located upstream of the anode exhaust gas heat exchanger and downstream of the fuel cell and the second piping constituting the anode exhaust gas passage located upstream of the combustor and downstream of the vapor-liquid separator are easily brought close to each other in substantially vertical direction (including vertical direction), so that the heat exchange unit can easily be configured.

In a sixth aspect of the present disclosure, the exhaust heat recovery passage of any one of the first to fifth aspects may be configured such that the exhaust heat recovery medium circulates in at least one of the anode exhaust gas heat exchanger and the flue gas heat exchanger and a hot water storage tank, and the anode exhaust gas heat exchanger and the flue gas heat exchanger may be connected in parallel with each other in the exhaust heat recovery passage.

According to this configuration, the exhaust heat recovery medium flowing in the anode exhaust gas heat exchanger and the exhaust heat recovery medium flowing in the flue gas heat exchanger are set to a substantially identical temperature (including an identical temperature), and both the cooling of the anode exhaust gas by the anode exhaust gas heat exchanger and the exhaust heat recovery of the flue gas by the flue gas heat exchanger can efficiently be performed.

In a seventh aspect of the present disclosure, the fuel cell system according to any one of the first to sixth aspects may further include a reformer that generates hydrogen-containing gas by reaction of a raw material and water while heated by heat generated by combustor.

According to this configuration, the hydrogen-containing gas used in the power generation of the fuel cell can be generated by the reformer heated by the heat generated in the combustor.

Although a fuel cell system according to an exemplary embodiment of the present disclosure will be described below with reference to the drawings, the present disclosure is not limited to the exemplary embodiment.

### (First exemplary embodiment)

A first exemplary embodiment of the present disclosure will be described below.

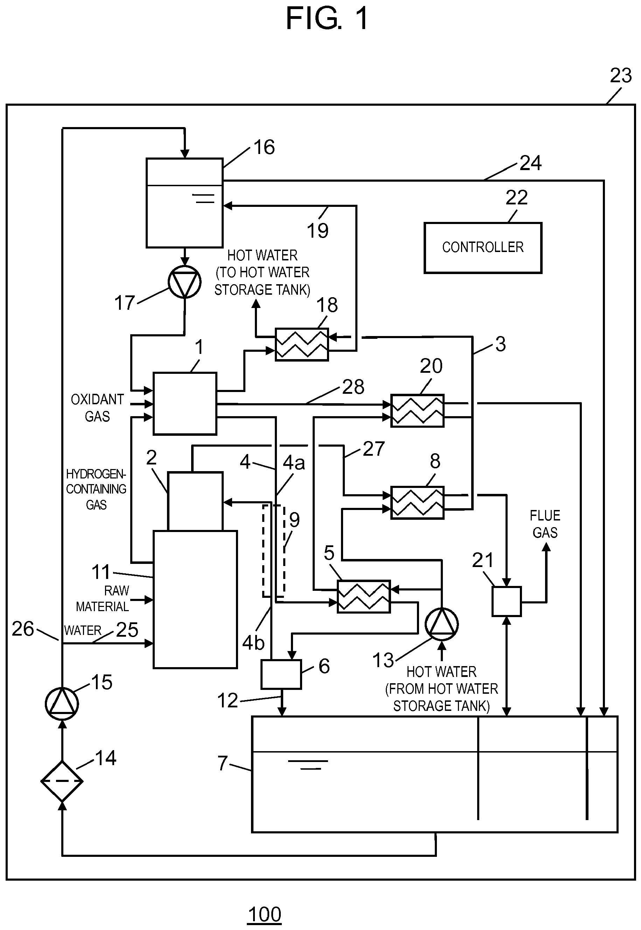

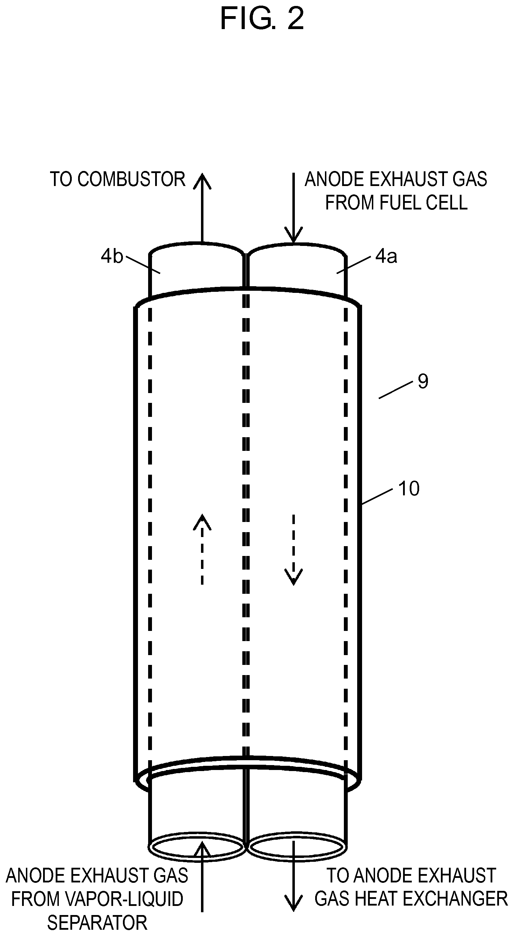

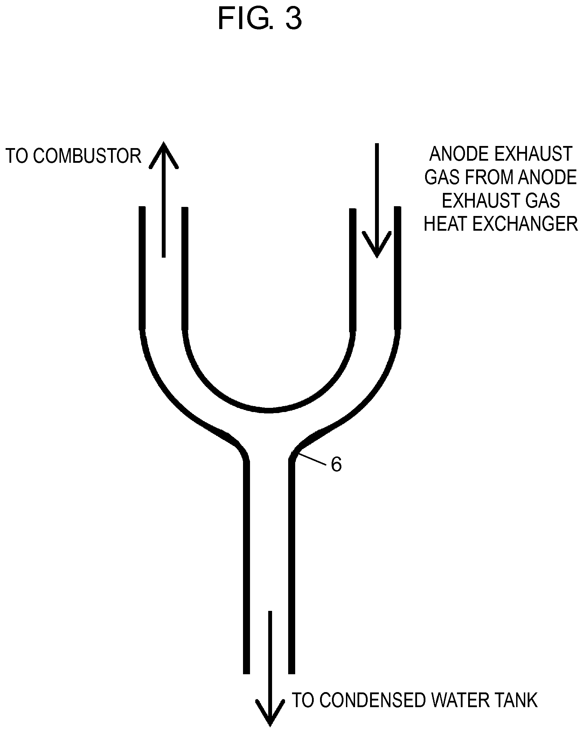

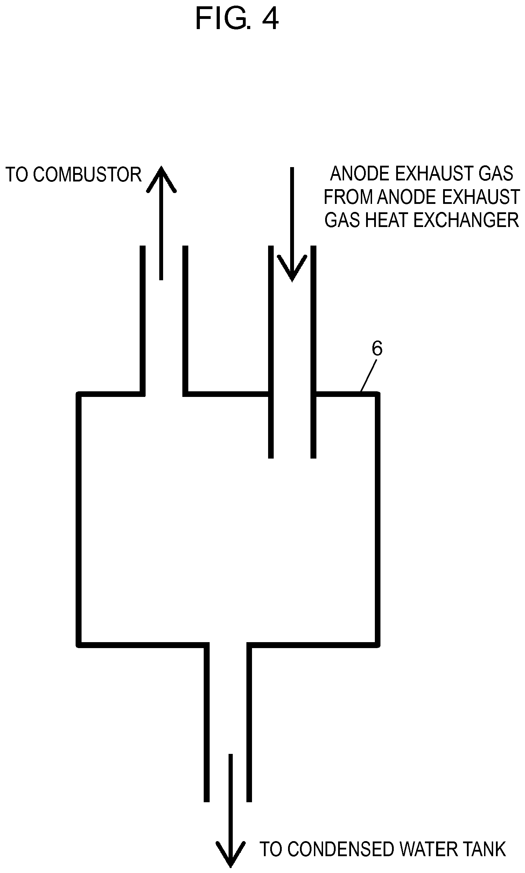

FIG. 1 is a block diagram illustrating a schematic configuration of fuel cell system 100 according to the first exemplary embodiment of the present disclosure. FIG. 2 is a schematic diagram illustrating an example of a configuration of heat exchange unit 9 in fuel cell system 100 of the first exemplary embodiment of the present disclosure. FIG. 3 is a schematic diagram illustrating an example of a configuration of vapor-liquid separator 6 in fuel cell system 100 of the first exemplary embodiment of the present disclosure, and FIG. 4 is a schematic diagram illustrating another example of the configuration of vapor-liquid separator 6 in fuel cell system 100 of the first exemplary embodiment of the present disclosure.

As illustrated in FIG. 1, fuel cell system 100 of the first exemplary embodiment includes fuel cell 1, combustor 2, exhaust heat recovery passage 3, anode exhaust gas passage 4, anode exhaust gas heat exchanger 5, vapor-liquid separator 6, condensed water tank 7, flue gas heat exchanger 8, and heat exchange unit 9.

Fuel cell 1 generates power using the hydrogen-containing gas and the oxidant gas. Combustor 2 burns the anode exhaust gas discharged from an anode of fuel cell 1. The exhaust heat recovery medium (hot water in a hot water storage tank) recovering the exhaust heat flows through exhaust heat recovery passage 3. The anode exhaust gas is supplied from fuel cell 1 to combustor 2 through anode exhaust gas passage 4. Anode exhaust gas heat exchanger 5 is disposed in a middle of anode exhaust gas passage 4, and cools the anode exhaust gas to condense the moisture contained in the anode exhaust gas by the heat exchange between the anode exhaust gas and the exhaust heat recovery medium.

Vapor-liquid separator 6 separates the anode exhaust gas cooled by anode exhaust gas heat exchanger 5 into a condensed water component and a gas component. Condensed water tank 7 stores the condensed water component separated from the gas component of the anode exhaust gas by vapor-liquid separator 6. Flue gas heat exchanger 8 recovers the exhaust heat from the flue gas by the heat exchange between the flue gas generated by combustor 2 and the exhaust heat recovery medium.

Heat exchange unit 9 performs the heat exchange between the anode exhaust gas flowing through anode exhaust gas passage 4 located upstream of anode exhaust gas heat exchanger 5 and downstream of fuel cell 1 and the anode exhaust gas flowing through anode exhaust gas passage 4 located upstream of combustor 2 and downstream of vapor-liquid separator 6.

In heat exchange unit 9, first piping 4a constituting anode exhaust gas passage 4 located upstream of anode exhaust gas heat exchanger 5 and downstream of fuel cell 1 and second piping 4b constituting anode exhaust gas passage 4 located upstream of combustor 2 and downstream of vapor-liquid separator 6 are in contact with each other. Heat exchange unit 9 includes heat insulator 10 that covers both first piping 4a and second piping 4b of heat exchange unit 9.

As illustrated in FIG. 2, heat exchange unit 9 is configured such that the anode exhaust gas in first piping 4a in heat exchange unit 9 flows downward, and such that the anode exhaust gas in second piping 4b in heat exchange unit 9 flows upward.

Referring to FIG. 1, fuel cell 1 and combustor 2 are located above vapor-liquid separator 6, heat exchange unit 9 is located above vapor-liquid separator 6, and anode exhaust gas heat exchanger 5 is located below heat exchange unit 9 and above vapor-liquid separator 6.

Exhaust heat recovery passage 3 is configured such that the exhaust heat recovery medium circulates in anode exhaust gas heat exchanger 5, flue gas heat exchanger 8, and the hot water storage tank, and anode exhaust gas heat exchanger 5 and flue gas heat exchanger 8 are connected in parallel with each other in exhaust heat recovery passage 3.

Fuel cell system 100 includes reformer 11 that supplies the hydrogen-containing gas, which is generated by a reaction of a raw material and water while heated by the heat generated by combustor 2, to fuel cell 1.

Condensed water tank 7 is located in the downward direction of vapor-liquid separator 6, and vapor-liquid separator 6 and condensed water tank 7 are connected to each other by condensed water passage 12.

As illustrated in FIG. 3, vapor-liquid separator 6 may be configured such that the moisture in the gas is discharged to condensed water tank 7 through drain piping branched from anode exhaust gas passage 4. As illustrated in FIG. 4, vapor-liquid separator 6 may be configured such that the moisture in the gas is separated in a tank provided in the middle of anode exhaust gas passage 4.

Referring to FIG. 1, the exhaust heat recovery medium in exhaust heat recovery passage 3 is circulated in exhaust heat recovery passage 3 by exhaust heat recovery medium circulator 13 provided in exhaust heat recovery passage 3.

The condensed water stored in condensed water tank 7 is purified by purifier 14, and supplied to reformer 11 and cooling water tank 16 by water circulator 15. The cooling water stored in cooling water tank 16 is circulated in cooling water circulation passage 19, in which cooling water tank 16, cooling water circulator 17, fuel cell 1, and cooling water heat exchanger 18 are sequentially connected in an annular form, by cooling water circulator 17.

A cathode exhaust gas discharged from a cathode of fuel cell 1 is subjected to the heat exchange with the exhaust heat recovery medium flowing out from anode exhaust gas heat exchanger 5 by cathode exhaust gas heat exchanger 20, and sent to condensed water tank 7. The moisture contained in the cathode exhaust gas is stored in condensed water tank 7 while becoming the condensed water using cathode exhaust gas heat exchanger 20.

The moisture contained in the flue gas generated by combustor 2 is condensed by flue gas heat exchanger 8 through flue gas passage 27, and the moisture is stored in condensed water tank 7 while separated from the gas component of the flue gas by vapor-liquid separator 21. The gas component of the flue gas separated from the condensed water component by vapor-liquid separator 21 is discharged to an outside of housing 23 accommodating the components of fuel cell system 100. Fuel cell system 100 is controlled by controller 22.

Reformer 11 generates a fuel gas (hydrogen-containing gas) by performing the steam reforming reaction of hydrocarbon-based raw material such as a methane and a propane and water (steam) using the reforming catalyst heated to temperatures of about 600°C to about 700°C by the heat of the flue gas of combustor 2 that burns the anode exhaust gas.

Fuel cell 1 of the first exemplary embodiment is a polymer electrolyte fuel cell that generates the power and the heat by performing an electrochemical reaction (exothermic reaction) of the fuel gas (hydrogen-containing gas), which is generated by reformer 11 and supplied to the anode, and the oxidant gas (air) supplied to the cathode.

In the configuration of the first exemplary embodiment, the hydrogen-containing gas generated by reformer 11 is directly supplied to fuel cell 1. Alternatively, a transformer that decreases carbon monoxide contained in the hydrogen-containing gas generated by reformer 11 by a shift reaction or a CO remover that decreases carbon monoxide by an oxidation reaction may be provided downstream of reformer 11.

Polymer electrolyte fuel cell 1 is configured such that the cooling water in cooling water circulation passage 19 circulates in fuel cell 1 in order to maintain an operating temperature during the power generation of fuel cell 1 at a temperature (for example, about 70°C to about 80°C) suitable for the reaction.

The hot water from the hot water storage tank (not illustrated) is circulated in exhaust heat recovery passage 3 by exhaust heat recovery medium circulator 13, recovers the exhaust heat from fuel cell 1 and the exhaust heat of the flue gas discharged from combustor 2 in flue gas heat exchanger 8, anode exhaust gas heat exchanger 5, cathode exhaust gas heat exchanger 20, and cooling water heat exchanger 18, and returns to the hot water storage tank (not illustrated).

The cooling water in cooling water circulation passage 19 flows in order of a cooling unit of fuel cell 1, cooling water heat exchanger 18, cooling water tank 16 that stores the water purified by purifier 14 in condensed water tank 7 as the cooling water of cooling water circulation passage 19, and cooling water circulator 17, by cooling water circulator 17 constructed with a centrifugal pump having no self-feeding capability. Cooling water tank 16 is installed in the highest portion of cooling water circulation passage 19 such that air accumulated in cooling water circulation passage 19 exits to an upper portion of cooling water tank 16.

In the first exemplary embodiment, cooling water circulator 17 is disposed in cooling water circulation passage 19 between an outlet of cooling water tank 16 and an inlet of fuel cell 1. Alternatively, cooling water circulator 17 may be disposed in cooling water circulation passage 19 between the outlet of fuel cell 1 and the inlet of cooling water tank 16. In this case, the outlet of cooling water circulator 17 is preferably installed upward such that the air accumulated in cooling water circulator 17 exits to cooling water tank 16.

The flue gas exhausted from combustor 2 is subjected to the heat exchange with the exhaust heat recovery medium flowing through exhaust heat recovery passage 3 by flue gas heat exchanger 8. The moisture contained in the flue gas is condensed by flue gas heat exchanger 8. The flue gas and its condensed water from flue gas heat exchanger 8 are separated into the condensed water component and the gas component by vapor-liquid separator 21, the flue gas that is the gas component is exhausted to the outside of housing 23, and the condensed water is stored in condensed water tank 7.

In the fuel gas (hydrogen-containing gas) supplied to the anode of fuel cell 1, the anode exhaust gas (hydrogen-containing gas) that is exhausted from the anode without being used in the power generation is subjected to the heat exchange with the exhaust heat recovery medium flowing through exhaust heat recovery passage 3 by anode exhaust gas heat exchanger 5. The moisture contained in the anode exhaust gas is condensed by anode exhaust gas heat exchanger 5.

The anode exhaust gas and its condensed water from anode exhaust gas heat exchanger 5 are separated into the condensed water component and the gas component by vapor-liquid separator 6, the anode exhaust gas that is the gas component is burned by combustor 2, and the condensed water is stored in condensed water tank 7.

The cathode exhaust gas discharged from the cathode of fuel cell 1 is subjected to the heat exchange with the exhaust heat recovery medium flowing through exhaust heat recovery passage 3 by cathode exhaust gas heat exchanger 20, and the moisture contained in the cathode exhaust gas is condensed by cathode exhaust gas heat exchanger 20.

The cathode exhaust gas and its condensed water from cathode exhaust gas heat exchanger 20 are sent to condensed water tank 7, the cathode exhaust gas that is the gas component is discharged from condensed water tank 7, and the condensed water is stored in condensed water tank 7.

The condensed water stored in condensed water tank 7 is passed through purifier 14 using water circulator 15, and pumped up to cooling water tank 16.

At this point, in the condensed water, impurities such as a metal ion are purified during the passage through purifier 14 such that water quality is suitable for the circulation in the cooling unit of fuel cell 1. Cooling water tank 16 is disposed at a position higher than condensed water tank 7 and fuel cell 1, and the water exceeding an upper limit water level of cooling water tank 16 is returned to condensed water tank 7 through circulation passage 24.

The water stored in condensed water tank 7 (the water stored in cooling water tank 16 and condensed water tank 7 in the case that city water is supplied to cooling water tank 16) is sequentially purified by repeating these operations. Condensed water tank 7, purifier 14, water circulator 15, and cooling water tank 16 are sequentially connected in an annular form to constitute circulation passage 24.

When reformer 11 generates the fuel gas (hydrogen-containing gas), a reformed water solenoid valve (not illustrated) is opened, the water purified by purifier 14 is supplied to reformer 11 from water supply passage 25, which includes a reformed water solenoid valve and is branched at branchpoint 26 from circulation passage 24.

Reformer 11 generates the fuel gas (hydrogen-containing gas) by the steam reforming reaction of the hydrocarbon-based raw material such as methane and propane and the water (steam) using the reforming catalyst heated to temperatures of about 600°C to about 700°C by the heat of the flue gas of combustor 2 that burns the anode exhaust gas.

At this point, by operating cooling water circulator 17 of cooling water circulation passage 19, the purification can be performed while the inside of cooling water tank 16 is stirred, so that the purified water and the unpurified water can be prevented from being biased in a specific place, for example, a bottom of cooling water tank 16.

A circulation solenoid valve (not illustrated) is provided in circulation passage 24 downstream of branchpoint 26 at which water supply passage 25 to reformer 11 is branched from circulation passage 24 and upstream of cooling water tank 16, and a reformed water solenoid valve is provided in water supply passage 25 between branchpoint 26 and reformer 11.

The circulation solenoid valve is closed when the water is supplied to reformer 11 using water supply passage 25, and opened when the water is not supplied to reformer 11 using water supply passage 25 but the water is circulated in circulation passage 24.

The reformed water solenoid valve is opened when the water is supplied to reformer 11 using water supply passage 25, and closed when the water is not supplied to reformer 11 using water supply passage 25 but the water is circulated in circulation passage 24.

Condensed water tank 7 includes a water temperature detector (not illustrated) that detects the temperature of the water (condensed water) stored in condensed water tank 7, a water level detector (not illustrated) that detects a water level of the water stored in condensed water tank 7, and an overflow passage (not illustrated) through which the water exceeding a predetermined water level is discharged from condensed water tank 7 such that the water level of condensed water tank 7 does not exceed the predetermined water level.

Cooling water tank 16 includes a heat generating device (not illustrated), which is constructed with an electric heater or the like and heats the water stored in cooling water tank 16 and a water level detector (not illustrated) that detects the water level of the water stored in cooling water tank 16. The water (cooling water) exceeding the predetermined water level in cooling water tank 16 is discharged to condensed water tank 7 through circulation passage 24 acting as the overflow passage of cooling water tank 16.

An atmospheric temperature detector (not illustrated) that detects an atmospheric temperature in housing 23, and controller 22 are provided in housing 23. The atmospheric temperature detector may detect an atmospheric temperature.

When the water level in condensed water tank 7 is lower than or equal to the lower-limit water level, the water level detector detects a water decrease, and controller 22 supplies the stored hot water in the hot water storage tank or the tap water to condensed water tank 7 or cooling water tank 16 using water supply means (not illustrated). Water circulator 15 is operated by controller 22 when the water level detector of condensed water tank 7 detects the water level higher than a lower-limit water level.

As illustrated in FIG. 2, in heat exchange unit 9, first piping 4a constituting anode exhaust gas passage 4 located upstream of anode exhaust gas heat exchanger 5 and downstream of fuel cell 1 and second piping 4b constituting anode exhaust gas passage 4 located upstream of combustor 2 and downstream of vapor-liquid separator 6 are in contact with each other. Heat exchange unit 9 includes heat insulator 10 that covers both first piping 4a and second piping 4b of heat exchange unit 9.

Desirably piping (for example, metal piping) made of a material having high thermal conductivity is used as first piping 4a and second piping 4b of heat exchange unit 9. Desirably first piping 4a and second piping 4b of heat exchange unit 9 is configured so as to come into contact with each other with an area that is as wide as possible.

In the first exemplary embodiment, heat exchange unit 9 is constructed by bringing first piping 4a and second piping 4b of heat exchange unit 9 into contact with each other. However, the present disclosure is not limited to the first exemplary embodiment, but heat exchange unit 9 may be constructed with a heat exchanger.

Reformer 11 is a reactor that generates the hydrogen-containing gas using the raw material and the water (reformed water). In reformer 11, the hydrogen-containing gas is generated by a reforming reaction of the raw material and the steam under existence of a catalyst. Reformer 11 is heated to a temperature suitable for the catalyst, for example, 600°C to 700°C. A vaporizer (not illustrated) is provided in reformer 11, and generates the steam from the water (reformed water) supplied through water supply passage 25.

The raw material is supplied from a raw material feeder (not illustrated) to reformer 11 through a raw material supply passage. For example, the raw material is a gas, such as city gas mainly containing methane, a natural gas, and a Liquefied Petroleum Gas (LPG), which contains an organic compound composed of at least carbon and hydrogen. The raw material feeder has a function of regulating a flow rate of the raw material gas. Examples of the raw material feeder includes at least one of a booster and a flow regulating valve and a positive displacement pump.

Fuel cell 1 is a polymer electrolyte fuel cell that generates the power using the hydrogen-containing gas and the oxidant gas. In fuel cell 1, electricity and water are generated by the electrochemical reaction of the hydrogen-containing gas and the oxidant gas under the existence of the catalyst.

A cell (not illustrated), a cathode flow channel (not illustrated), and an anode flow channel (not illustrated) are provided in fuel cell 1. The hydrogen-containing gas, which is generated by reformer 11 and supplied through a hydrogen-containing gas supply passage, is passed through the anode flow channel. The air supplied from an air feeder (not illustrated) through an oxidant gas supply passage is passed through the cathode flow channel as the oxidant gas.

In the fuel gas (hydrogen-containing gas) supplied to the anode of fuel cell 1, the anode exhaust gas (hydrogen-containing gas) that is exhausted from the anode without being used in the power generation is burned by combustor 2, and the reforming catalyst of reformer 11 is heated to temperatures of about 600°C to about 700°C by the heat of the flue gas of combustor 2.

Circulation passage 24 is a passage through which the condensed water, in which the moisture in the exhaust gas (the flue gas discharged from combustor 2, the anode exhaust gas discharged from the anode of fuel cell 1, and the cathode exhaust gas discharged from the cathode of fuel cell 1) exhausted from the fuel cell 1 and combustor 2 is condensed, is circulated.

Condensed water tank 7, purifier 14, water circulator 15, the circulation solenoid valve, and cooling water tank 16 are connected in an annular form in this order on circulation passage 24. Water circulator 15 circulates the condensed water of condensed water tank 7 such that the condensed water is sequentially passed through purifier 14, water circulator 15, branchpoint 26, the circulation solenoid valve, and cooling water tank 16, and such that the condensed water is returned to condensed water tank 7.

The condensed water purified by purifier 14 also acts as the reformed water supplied from branchpoint 26 to reformer 11 through water supply passage 25 including the reformed water solenoid valve.

Flue gas heat exchanger 8 is provided between flue gas passage 27 and exhaust heat recovery passage 3, and performs the heat exchange between the flue gas exhausted from combustor 2 and the stored hot water (exhaust heat recovery medium) of the hot water storage tank circulating exhaust heat recovery passage 3. A known heat exchanger can be used as flue gas heat exchanger 8. The low-temperature stored hot water is heated by the high-temperature flue gas to raise the temperature of the stored hot water. On the other hand, the flue gas is cooled by the stored hot water.

Anode exhaust gas heat exchanger 5 is provided between anode exhaust gas passage 4 and exhaust heat recovery passage 3, and performs the heat exchange between the anode exhaust gas exhausted from the anode of fuel cell 1 and the stored hot water (exhaust heat recovery medium) of the hot water storage tank circulating exhaust heat recovery passage 3. A known heat exchanger can be used as anode exhaust gas heat exchanger 5. The stored hot water is heated by the high-temperature anode exhaust gas, and the anode exhaust gas is cooled by the stored hot water.

Cathode exhaust gas heat exchanger 20 is provided between cathode exhaust gas passage 28 and exhaust heat recovery passage 3, and performs the heat exchange between the cathode exhaust gas exhausted from the cathode of fuel cell 1 and the stored hot water (exhaust heat recovery medium) of the hot water storage tank circulating exhaust heat recovery passage 3. A known heat exchanger can be used as cathode exhaust gas heat exchanger 20. The stored hot water is heated by the high-temperature cathode exhaust gas, and the cathode exhaust gas is cooled by the stored hot water.

The exhaust gases (the flue gas discharged from combustor 2, the anode exhaust gas discharged from the anode of fuel cell 1, and the cathode exhaust gas discharged from the cathode of fuel cell 1) of fuel cell 1 and combustor 2 contain the moisture, the steam contained in the exhausted gas is condensed by the heat exchange with the stored hot water to generate the water (condensed water).

The condensed water flows in condensed water tank 7 constituting circulation passage 24 and circulates in circulation passage 24, the condensed water circulating in cooling water circulation passage 19 through cooling water tank 16 acts as the cooling water cooling fuel cell 1 to a predetermined temperature, and the condensed water flowing in water supply passage 25 acts as the reformed water.

Condensed water tank 7 is provided in circulation passage 24, and stores the condensed water generated by the cooling of the exhaust gases (the flue gas, the anode exhaust gas, and the cathode exhaust gas) of fuel cell 1 and combustor 2 by the stored hot water. Condensed water tank 7 constitutes a part of circulation passage 24, and each piping of flue gas passage 27, condensed water passage 12, and cathode exhaust gas passage is connected to condensed water tank 7.

The outlet of the condensed water of condensed water tank 7 is provided below the inlet of the water that circulates in circulation passage 24 and returns to condensed water tank 7, and piping connection positions of flue gas passage 27, condensed water passage 12, and the cathode exhaust gas passage. In the first exemplary embodiment, the outlet of condensed water is provided in a bottom of condensed water tank 7. The positions of the inlet and the outlet of the water are not particularly limited to the first exemplary embodiment.

An upstream end of the overflow passage (not illustrated) of condensed water tank 7 is connected to a predetermined height of condensed water tank 7. The outlet to which the overflow passage is connected is provided to the predetermined height of condensed water tank 7. When the water (condensed water) of condensed water tank 7 reaches the predetermined height, the water flows from the outlet of the overflow passage to the overflow passage.

Thus, the water (condensed water) lower than or equal to the predetermined height (predetermined volume) is stored in condensed water tank 7, and the water (condensed water) exceeding the predetermined height is discharged from condensed water tank 7 through the overflow passage.

Water circulator 15 is a pump, which is provided in circulation passage 24 and circulates the water (condensed water) of condensed water tank 7. In the first exemplary embodiment, water circulator 15 is provided in circulation passage 24 that is located downstream of condensed water tank 7 and purifier 14 and upstream of branchpoint 26. The water (condensed water) flowing from condensed water tank 7 is pumped up by water circulator 15, and circulated in circulation passage 24.

Purifier 14 is constructed with an ion exchange resin filter, and removes an ion (deionization) from the condensed water. An ion mainly poisoning the catalysts of reformer 11 and fuel cell 1 can be cited as the removed ion. Purifier 14 is provided in circulation passage 24 that is located upstream of branchpoint 26 and downstream of condensed water tank 7. Purifier 14 is disposed at a position higher than the outlet to which the overflow passage of condensed water tank 7 is connected.

Cooling water tank 16 is provided in circulation passage 24, and stores the water of circulation passage 24 as the cooling water of fuel cell 1, the water of circulation passage 24 being purified by purifier 14. The cooling water of cooling water tank 16 is circulated in cooling water circulation passage 19 by cooling water circulator 17 so as to return to cooling water tank 16 after sequentially flowing in cooling water tank 16, cooling water circulator 17, fuel cell 1, and cooling water heat exchanger 18. Fuel cell 1 is maintained at a temperature (for example, about 70°C to about 80°C) suitable for the reaction of the power generation.

Controller 22 controls capability of cooling water circulator 17 such that the temperature of the cooling water flowing from fuel cell 1 becomes, for example, 70°C.

The cooling water flowing out from cooling water tank 16 is passed through fuel cell 1, the temperature of the cooling water is raised by recovering the exhaust heat from fuel cell 1 in the interval, cooling water heat exchanger 18 transfers the exhaust heat of the raised temperature of the cooling water to the stored hot water, and the cooling water is cooled and returned to cooling water tank 16. During the power generation of fuel cell 1, temperature of the water (cooling water) in cooling water tank 16 becomes 50°C to 60°C.

The temperature of the stored hot water to which the exhaust heat is transferred is raised, and the stored hot water is stored in the hot water storage tank. As a result, fuel cell 1 is cooled by the cooling water, the exhaust heat recovered from fuel cell 1 is stored in the hot water storage tank as the high-temperature stored hot water, and the stored hot water is used as hot water supply by a user.

The hot water storage tank (not illustrated) of exhaust heat recovery passage 3 stores the water (stored hot water). The hot water storage tank is connected to a water supply apparatus (for example, waterline), and the tap water is supplied as the stored hot water from the water supply apparatus to the hot water storage tank.

The hot water storage tank is also connected to a hot water supply apparatus (not illustrated), and the stored hot water is supplied as the hot water from the hot water storage tank to the hot water supply apparatus. The hot water storage tank is provided while separated from circulation passage 24 (so as not to communicate with circulation passage 24), and the stored hot water of hot water storage tank and the water (condensed water) of circulation passage 24 are water of different systems.

Water supply passage 25 is branched from circulation passage 24 at branchpoint 26, and passes the water (condensed water purified by purifier 14) of circulation passage 24 as the reformed water to reformer 11. Water supply passage 25 includes the reformed water solenoid valve located near branchpoint 26. The reformed water solenoid valve is a solenoid valve, which is controlled by controller 22 so as to be opened when the water is supplied to reformer 11 using water supply passage 25 and so as to be closed when the water is not supplied to reformer 11 using water supply passage 25 but the water is circulated in circulation passage 24.

Branchpoint 26 is provided in circulation passage 24 that is located downstream of purifier 14 and water circulator 15 and upstream of the circulation solenoid valve, cooling water tank 16, and condensed water tank 7. A downstream end of water supply passage 25 is connected to reformer 11. The circulation solenoid valve is a solenoid valve, which is controlled by controller 22 so as to be closed when the water is supplied to reformer 11 using water supply passage 25 and so as to be opened when the water is not supplied to reformer 11 using water supply passage 25 but the water is circulated in circulation passage 24.

Thus, when the water (condenser) is stored in condensed water tank 7 in the closed state of the circulation solenoid valve and the opened state of the reformed water solenoid valve, after the water (condenser) of condensed water tank 7 is purified by purifier 14, water circulator 15 operated by controller 22 causes the water (condenser) to flow in water supply passage 25 at branchpoint 26 and supplies the water (condenser) as the reformed water to reformer 11.

At this point, water circulator 15 regulates the flow rate of the reformed water passed through water supply passage 25 such that a molar ratio (S/C ratio) of the reformed water and carbon in the raw material in reformer 11 becomes, for example, 2.5 to 3.5.

An operation of fuel cell system 100 of the first exemplary embodiment having the above configuration will be described below.

In fuel cell system 100, controller 22 checks the water level of condensed water tank 7 using a water level detector before the water supply to reformer 11 is started. When the water level in condensed water tank 7 is lower than or equal to the lower-limit water level, controller 22 supplies the stored hot water in the hot water storage tank or the tap water to condensed water tank 7 using water supply means (not illustrated). Water circulator 15 is operated by controller 22 when the water level detector of condensed water tank 7 detects the water level high than the lower-limit water level.

At the beginning of the operation of water circulator 15, the circulation solenoid valve is in the opened state and the reformed water solenoid valve is in the closed state, so that the water (condensed water) of condensed water tank 7 is pumped by water circulator 15 to flow in purifier 14. Impurities such as a metal ion contained in the condensed water or the tap water is removed during the passage through purifier 14.

The water passed through purifier 14 is stored in cooling water tank 16 from branchpoint 26 through the circulation solenoid valve in the opened state. The water exceeding the predetermined water level in cooling water tank 16 is discharged to condensed water tank 7 through circulation passage 24 acting as the overflow passage of cooling water tank 16.

Water circulator 15 sequentially passes the condensed water of condensed water tank 7 through purifier 14, water circulator 15, branchpoint 26, the circulation solenoid valve, and cooling water tank 16, and returns the condensed water to condensed water tank 7. The water stored in condensed water tank 7 is sequentially purified by repeating this operation.

In order to start the generation of the hydrogen-containing gas by reformer 11, controller 22 opens the reformed water solenoid valve while closing the circulation solenoid valve when the water supply to reformer 11 is started.

In this case, the water (condensed water) of condensed water tank 7 is pumped by water circulator 15, purifier 14 removes the impurities such as the metal ion contained in the water (condensed water) of condensed water tank 7, and the water (condensed water) is passed from branchpoint 26 through water supply passage 25 and supplied to reformer 11.

Reformer 11 generates the steam from the water (reformed water) supplied through water supply passage 25 using the heat of the flue gas of combustor 2. The hydrogen-containing gas is generated by the reforming reaction of the raw material (for example, a city gas mainly containing methane, a natural gas, or gas such as LPG containing hydrocarbon) supplied from the raw material feeder (not illustrated) to reformer 11 through the raw material supply passage and the steam under the existence of the catalyst. Reformer 11 heats the catalyst to a proper temperature, for example, 600°C to 700°C using the heat of the flue gas of combustor 2.

The flue gas exhausted from combustor 2 is subjected to the heat exchange with the exhaust heat recovery water (stored hot water) flowing through exhaust heat recovery passage 3 by flue gas heat exchanger 8. The moisture contained in the flue gas is condensed by flue gas heat exchanger 8.

The flue gas and its condensed water from flue gas heat exchanger 8 are separated into the condensed water component and the gas component by vapor-liquid separator 21, the flue gas that is the gas component is exhausted to the outside of housing 23, and the condensed water is stored in condensed water tank 7.

The hydrogen-containing gas, which is generated by reformer 11 and supplied through the hydrogen-containing gas supply passage, is passed through the anode passage of fuel cell 1, and air supplied from the air feeder (not illustrated) through oxidant gas supply passage is passed as the oxidant gas through the cathode passage of fuel cell 1. The electrochemical reaction of the hydrogen-containing gas and the oxidant gas is performed in the cell of fuel cell 1.

In the fuel gas (hydrogen-containing gas) supplied to the anode of fuel cell 1, the anode exhaust gas (hydrogen-containing gas) discharged from the anode without being used in the power generation is cooled by the heat exchange with the anode exhaust gas flowing through second piping 4b of anode exhaust gas passage 4 located upstream of combustor 2 and downstream of vapor-liquid separator 6 in first piping 4a of heat exchange unit 9. Then, the anode exhaust gas is further cooled by the heat exchange with the exhaust heat recovery medium flowing through exhaust heat recovery passage 3 in anode exhaust gas heat exchanger 5, and the moisture contained in the anode exhaust gas is condensed.

The anode exhaust gas and its condensed water from anode exhaust gas heat exchanger 5 are separated into the condensed water component and the gas component by vapor-liquid separator 6, and the condensed water component separated from the gas component of the anode exhaust gas by vapor-liquid separator 6 is stored in condensed water tank 7.

On the other hand, the anode exhaust gas in which the condensed water component is removed by vapor-liquid separator 6 is heated by the heat exchange with the anode exhaust gas flowing through first piping 4a of anode exhaust gas passage 4 located upstream of anode exhaust gas heat exchanger 5 and downstream of fuel cell 1 in second piping 4b of heat exchange unit 9. Consequently, the anode exhaust gas is supplied to combustor 2 while the accompanying fine water drops are surely removed, and burned.

The cathode exhaust gas discharged from the cathode of fuel cell 1 is subjected to the heat exchange with the exhaust heat recovery water flowing through exhaust heat recovery passage 3 by cathode exhaust gas heat exchanger 20, and the moisture contained in the cathode exhaust gas is condensed by cathode exhaust gas heat exchanger 20. The cathode exhaust gas and its condensed water from cathode exhaust gas heat exchanger 20 are sent to condensed water tank 7, the cathode exhaust gas that is the gas component is discharged from condensed water tank 7, and the condensed water is stored in condensed water tank 7.

On the other hand, while the stored hot water (exhaust heat recovery medium) from the hot water storage tank (not illustrated) is circulated in exhaust heat recovery passage 3 by exhaust heat recovery medium circulator 13, the stored hot water (exhaust heat recovery medium) flowing from exhaust heat recovery medium circulator 13 is divided into two directions. One of the stored hot waters (exhaust heat recovery mediums) flows to cooling water heat exchanger 18 through flue gas heat exchanger 8, and the other stored hot water (exhaust heat recovery medium) flows to cooling water heat exchanger 18 through anode exhaust gas heat exchanger 5 and cathode exhaust gas heat exchanger 20.

The stored hot water recovers the exhaust heat of fuel cell 1 and combustor 2 in flue gas heat exchanger 8, anode exhaust gas heat exchanger 5, cathode exhaust gas heat exchanger 20, and cooling water heat exchanger 18, and the stored hot water returns to the hot water storage tank (not illustrated) with the temperature of about 70°C.

The condensed waters generated by flue gas heat exchanger 8, anode exhaust gas heat exchanger 5, and cathode exhaust gas heat exchanger 20 flow in condensed water tank 7. When the water level of the stored condensed water reaches the predetermined height of condensed water tank 7, the water is discharged from the overflow passage (not illustrated).

The water (condensed water) of condensed water tank 7 is pumped by water circulator 15 to flow in purifier 14. Purifier 14 removes the ion in the water (condensed water) of condensed water tank 7, and the water (condensed water) is supplied from branchpoint 26 to reformer 11 through water supply passage 25. The flow rate of water (reformed water) supplied to reformer 11 is regulated by water circulator 15 according to the S/C ratio.

The stored hot water accumulated in the hot water storage tank is supplied to a hot water supplying apparatus as necessary. Consequently, the water (tap water) is supplied to the hot water storage tank from the water supply apparatus when the stored hot water decreases in the hot water storage tank.

The cooling water of cooling water tank 16 is circulated in cooling water circulation passage 19 by cooling water circulator 17, and maintains the temperature of fuel cell 1 at a temperature (for example, about 70°C to about 80°C) suitable for the reaction of the power generation.

As described above, fuel cell system 100 of the first exemplary embodiment includes fuel cell 1 that generates the power using the hydrogen-containing gas and the oxidant gas, combustor 2 that burns the anode exhaust gas discharged from the anode of fuel cell 1, exhaust heat recovery passage 3 through which the exhaust heat recovery medium (the hot water of the hot water storage tank) that recovers the exhaust heat is passed, and anode exhaust gas passage 4 through which the anode exhaust gas is supplied from fuel cell 1 to combustor 2. Fuel cell system 100 also includes anode exhaust gas heat exchanger 5, which is disposed in the middle of anode exhaust gas passage 4 and cools the anode exhaust gas to condense the moisture contained in the anode exhaust gas by the heat exchange between the anode exhaust gas and the exhaust heat recovery medium, and vapor-liquid separator 6 that separates the anode exhaust gas cooled by anode exhaust gas heat exchanger 5 into the condensed water component and the gas component.

Fuel cell system 100 also includes condensed water tank 7 that stores the condensed water component separated from the gas component of the anode exhaust gas by vapor-liquid separator 6 and flue gas heat exchanger 8 that recovers the exhaust heat from the flue gas by the heat exchange between the flue gas generated by combustor 2 and the exhaust heat recovery medium. Fuel cell system 100 also includes heat exchange unit 9 that performs the heat exchange between the anode exhaust gas flowing through anode exhaust gas passage 4 located upstream of anode exhaust gas heat exchanger 5 and downstream of fuel cell 1 and the anode exhaust gas flowing through anode exhaust gas passage 4 located upstream of combustor 2 and downstream of vapor-liquid separator 6.

In the above configuration, the anode exhaust gas discharged from fuel cell 1 is cooled by the heat exchange with the anode exhaust gas flowing through anode exhaust gas passage 4 located upstream of combustor 2 and downstream of vapor-liquid separator 6 in heat exchange unit 9, and further cooled by the heat exchange with the exhaust heat recovery medium in anode exhaust gas heat exchanger 5. Consequently, the moisture contained in the anode exhaust gas is condensed, the condensed water component is separated and removed from the anode exhaust gas by vapor-liquid separator 6, and the condensed water component separated from the gas component of the anode exhaust gas by vapor-liquid separator 6 is stored in condensed water tank 7.

On the other hand, the anode exhaust gas in which the condensed water component is removed by vapor-liquid separator 6 is heated by the heat exchange with the anode exhaust gas flowing through anode exhaust gas passage 4 located upstream of anode exhaust gas heat exchanger 5 and downstream of fuel cell 1 in heat exchange unit 9. Consequently, the anode exhaust gas is supplied to combustor 2 while the fine water drops associated with the anode exhaust gas are surely removed.

Thus, the fuel cell system of the first exemplary embodiment can properly deal with the conventional problem that the combustion state of the combustor becomes unstable due to the water drops associated with the anode exhaust gas, decrease the possibility of generating the water drops in the anode exhaust gas introduced to combustor 2, and improve combustion stability of the anode exhaust gas in combustor 2.

The exhaust heat recovery medium can recover the exhaust heat from the flue gas in flue gas heat exchanger 8, and recover the exhaust heat from the anode exhaust gas in anode exhaust gas heat exchanger 5.

In anode exhaust gas heat exchanger 5, the calorific value that can be recovered from the anode exhaust gas decreases slightly by providing heat exchange unit 9 in anode exhaust gas passage 4 located upstream of anode exhaust gas heat exchanger 5 and downstream of fuel cell 1 as compared with the case that heat exchange unit 9 is not provided. However, the temperature of the anode exhaust gas supplied to combustor 2 is raised by providing heat exchange unit 9 in anode exhaust gas passage 4 located upstream of combustor 2 and downstream of vapor-liquid separator 6 as compared with the case that heat exchange unit 9 is not provided. The exhaust heat of the flue gas generated in combustor 2 is recovered by the exhaust heat recovery medium in flue gas heat exchanger 8, so that the decrease in calorific value that can be recovered from the anode exhaust gas by anode exhaust gas heat exchanger 5 is not a problem.

Generally the temperature of the anode exhaust gas discharged from fuel cell 1 is lower than the temperature of the flue gas discharged from combustor 2. However, in order to properly deal with the conventional problem that the combustion state of combustor 2 becomes unstable due to the water drops associated with the anode exhaust gas, the anode exhaust gas may be supplied to combustor 2 while heated higher than the temperature at which the steam in the anode exhaust gas is condensed. Consequently, even if the moisture is not separated and removed in the middle of anode exhaust gas passage 4, it is not necessary to heat the anode exhaust gas to a temperature higher than or equal to the temperature of the anode exhaust gas discharged from fuel cell 1.

When the anode exhaust gas discharged from fuel cell 1 is cooled by heat exchange unit 9 and anode exhaust gas heat exchanger 5, the moisture contained in the anode exhaust gas is condensed, and the condensed water component is separated and removed from the anode exhaust gas by vapor-liquid separator 6. Anode exhaust gas heat exchanger 5 cools the anode exhaust gas, which allows a sufficient temperature difference to be generated between the anode exhaust gas flowing through anode exhaust gas passage 4 located upstream of anode exhaust gas heat exchanger 5 and downstream of fuel cell 1 and the anode exhaust gas flowing through anode exhaust gas passage 4 located upstream of combustor 2 and downstream of vapor-liquid separator 6. For this reason, even in the configuration in which the anode exhaust gas supplied to combustor 2 is heated, the temperature of the anode exhaust gas supplied to combustor 2 can be set higher than the temperature at which the steam in the anode exhaust gas is condensed by the heat exchange with the anode exhaust gas discharged from fuel cell 1.

In the case that the anode exhaust gas supplied to combustor 2 is heated by the heat exchange with the anode exhaust gas discharged from fuel cell 1, efficiency of recovering the exhaust heat of the fuel cell system using the exhaust heat recovery medium is high, and heat exchange unit 9 can simply be constructed at low cost as compared with the case that the anode exhaust gas supplied to combustor 2 is heated by the heat exchange with the flue gas discharged from combustor 2.

Thus, the possibility of generating the water drops in the anode exhaust gas introduced to combustor 2 can be decreased without degrading the efficiency of the exhaust heat recovery by the exhaust heat recovery medium, and the combustion stability of the anode exhaust gas in combustor 2 can be improved.

In fuel cell system of the first exemplary embodiment, heat exchange unit 9 may be configured such that first piping 4a constituting anode exhaust gas passage 4 located upstream of anode exhaust gas heat exchanger 5 and downstream of fuel cell 1 and second piping 4b constituting anode exhaust gas passage 4 located upstream of combustor 2 and downstream of vapor-liquid separator 6 are in contact with each other.

Consequently, the heat exchange can be performed between first piping 4a and second piping 4b of heat exchange unit 9 by direct heat conduction, and the state in which first piping 4a and second piping 4b are in contact with each other can be maintained using a bundling component such as a bundling tie. Thus, the simple configuration of the heat exchange between first piping 4a and second piping 4b of heat exchange unit 9 contributes to cost reduction of the fuel cell system.

In fuel cell system 100 of the first exemplary embodiment, heat exchange unit 9 may include heat insulator 10 that covers both first piping 4a and second piping 4b.

According to this configuration, additionally, the heat of (the anode exhaust gas flowing through) first piping 4a and the heat of (the anode exhaust gas flowing through) second piping 4b of heat exchange unit 9 are radiated to the outside air while the state in which first piping 4a and second piping 4b of heat exchange unit 9 are in contact with each other is maintained by heat insulator 10. Thus, (the anode exhaust gas flowing through) first piping 4a and (the anode exhaust gas flowing through) second piping 4b of heat exchange unit 9 can be prevented from being cooled by the outside air. Accordingly, the heat of (the anode exhaust gas flowing through) first piping 4a of heat exchange unit 9 can more surely be transferred to (the anode exhaust gas flowing through) second piping 4b of heat exchange unit 9 without waste and at low cost, the anode exhaust gas flowing through second piping 4b can be heated to prevent the fine water drops from being generated in the anode exhaust gas supplied to combustor 2.

Heat insulator 10 convers both first piping 4a and second piping 4b of heat exchange unit 9 while first piping 4a and second piping 4b of heat exchange unit 9 are in contact with each other, which allows the elimination of the bundling using the bundling component such as the bundling tie. Even if the bundling is temporarily performed using the bundling component such as the bundling tie, heat insulator 10 can maintain the state in which first piping 4a and second piping 4b of heat exchange unit 9 are in contact with each other.

In fuel cell system 100 of the first exemplary embodiment, heat exchange unit 9 may be configured such that the anode exhaust gas in first piping 4a in heat exchange unit 9 flows downward, and such that the anode exhaust gas in second piping 4b in heat exchange unit 9 flows upward.

According to this configuration, additionally, even if the condensed water is generated in first piping 4a of heat exchange unit 9, the condensed water can be moved downward by the gravity and the flow of the anode exhaust gas in first piping 4a, and the condensed water can be prevented from disturbing the flow of the anode exhaust gas in first piping 4a. Even if the condensed water flows in second piping 4b of heat exchange unit 9, the gravity can prevent the condensed water from flowing in combustor 2, and the condensed water remaining in second piping 4b of heat exchange unit 9 can be removed by the heat transferred from first piping 4a of heat exchange unit 9.

A length of the contact between first piping 4a and second piping 4b of heat exchange unit 9 can be lengthened by arranging first piping 4a and second piping 4b of heat exchange unit 9 in substantially parallel (including parallel). Thus, the heat exchange between first piping 4a and second piping 4b of heat exchange unit 9 can sufficiently be performed in heat exchange unit 9 by adjusting the length of the portion in which first piping 4a and second piping 4b are in contact with each other.

In fuel cell system 100 of the first exemplary embodiment, fuel cell 1 and combustor 2 may be located above vapor-liquid separator 6, heat exchange unit 9 may be located above vapor-liquid separator 6, and anode exhaust gas heat exchanger 5 may be located below heat exchange unit 9 and above vapor-liquid separator 6.

According to this configuration, additionally, the condensed water condensed by anode exhaust gas passage 4 is introduced to vapor-liquid separator 6 using the gravity, and the condensed water can be prevented from disturbing the flow of the anode exhaust gas. First piping 4a constituting anode exhaust gas passage 4 located upstream of anode exhaust gas heat exchanger 5 and downstream of fuel cell 1 and second piping 4b constituting anode exhaust gas passage 4 located upstream of combustor 2 and downstream of vapor-liquid separator 6 are easily brought close to each other in substantially vertical direction (including vertical direction), so that heat exchange unit 9 can easily be configured.

Anode exhaust gas heat exchanger 5, flue gas heat exchanger 8, and cathode exhaust gas heat exchanger 20 are illustrated in FIG. 1 while put sideways. However, actually anode exhaust gas heat exchanger 5, flue gas heat exchanger 8, and cathode exhaust gas heat exchanger 20 are properly disposed and configured such that the gas flows from an upper portion to a lower portion and such that the condensed water does not disturb the flow of the gas.

In fuel cell system 100 of the first exemplary embodiment, exhaust heat recovery passage 3 may be configured such that the exhaust heat recovery medium circulates in at least one of anode exhaust gas heat exchanger 5 and flue gas heat exchanger 8 and the hot water storage tank, and anode exhaust gas heat exchanger 5 and flue gas heat exchanger 8 may be connected in parallel with each other in exhaust heat recovery passage 3.

According to this configuration, additionally, the exhaust heat recovery medium flowing in anode exhaust gas heat exchanger 5 and the exhaust heat recovery medium flowing in flue gas heat exchanger 8 are set to a substantially identical temperature (including an identical temperature), and both the cooling of the anode exhaust gas by anode exhaust gas heat exchanger 5 and the exhaust heat recovery of the flue gas by flue gas heat exchanger 8 can efficiently be performed.

Fuel cell system 100 of the first exemplary embodiment may include reformer 11 that supplies the hydrogen-containing gas, which is generated by the reaction of the raw material and the water while heated by the heat generated by combustor 2, to fuel cell 1.

According to this configuration, additionally, the hydrogen-containing gas used in the power generation of fuel cell 1 can be generated by reformer 11 heated by the heat generated in combustor 2.

It is clear from the above description that those skilled in the art can make modifications and other exemplary embodiments of the present disclosure. Accordingly, the above description should be interpreted as only illustration, and is intended to teach the best mode carrying out the present disclosure to those skilled in the art. The details of at least one of the structure and the function can substantially be changed without departing from the spirit of the present disclosure.

### INDUSTRIAL APPLICABILITY

As described above, the fuel cell system of the present disclosure can decrease the possibility of generating the water drops in the anode exhaust gas introduced to the combustor without degrading the efficiency of the exhaust heat recovery by the exhaust heat recovery medium, and improve the combustion stability of the anode exhaust gas in the combustor. Therefore, the present disclosure is usefully applicable to the fuel cell system, such as a domestic cogeneration system, which includes the fuel cell that generates the power using the hydrogen-containing gas and the oxidant gas and the combustor that burns the anode exhaust gas discharged from the fuel cell.

### REFERENCE MARKS IN THE DRAWINGS

- 1: fuel cell
- 2: combustor
- 3: exhaust heat recovery passage
- 4: anode exhaust gas passage
- 4a: first piping
- 4b: second piping
- 5: anode exhaust gas heat exchanger
- 6: vapor-liquid separator
- 7: condensed water tank
- 8: flue gas heat exchanger
- 9: heat exchange unit
- 10: heat insulator
- 11: reformer
- 12: condensed water passage
- 13: exhaust heat recovery medium circulator
- 14: purifier
- 15: water circulator
- 16: cooling water tank
- 17: cooling water circulator
- 18: cooling water heat exchanger
- 19: cooling water circulation passage
- 20: cathode exhaust gas heat exchanger
- 21: vapor-liquid separator
- 22: controller
- 23: housing
- 24: circulation passage
- 25: water supply passage
- 26: branchpoint
- 27: flue gas passage
- 28: cathode exhaust gas passage
- 100: fuel cell system

## Claims

1. A fuel cell system comprising:
a fuel cell that generates power using a hydrogen-containing gas and an oxidant gas;
a combustor that burns an anode exhaust gas discharged from the fuel cell;
an exhaust heat recovery passage through which an exhaust heat recovery medium recovering exhaust heat flows;
an anode exhaust gas passage through which the anode exhaust gas is supplied from the fuel cell to the combustor;
an anode exhaust gas heat exchanger that is disposed in a middle of the anode exhaust gas passage, cools the anode exhaust gas by heat exchange between the anode exhaust gas and the exhaust heat recovery medium, and condenses moisture contained in the anode exhaust gas;
a vapor-liquid separator that separates the anode exhaust gas cooled by the anode exhaust gas heat exchanger into a condensed water component and a gas component;
a condensed water tank that stores the condensed water component separated by the vapor-liquid separator;
a flue gas heat exchanger that recovers the exhaust heat from a flue gas by heat exchange between the flue gas generated by the combustor and the exhaust heat recovery medium; and
a heat exchange unit that performs the heat exchange between the anode exhaust gas flowing through a first part of the anode exhaust gas passage located upstream of the anode exhaust gas heat exchanger and downstream of the fuel cell, and the anode exhaust gas flowing through a second part of the anode exhaust gas passage located upstream of the combustor and downstream of the vapor-liquid separator.

2. The fuel cell system according to claim 1, wherein the heat exchange unit includes a first piping constituting the first part of the anode exhaust gas passage located upstream of the anode exhaust gas heat exchanger and downstream of the fuel cell, and a second piping constituting the second part of the anode exhaust gas passage located upstream of the combustor and downstream of the vapor-liquid separator, and
the heat exchange unit is configured in such a manner that the first piping and the second piping are in contact with each other.

3. The fuel cell system according to claim 2, wherein the heat exchange unit includes a heat insulator that covers both the first piping and the second piping.

4. The fuel cell system according to claim 2 or 3, wherein the heat exchange unit is configured in such a manner that the anode exhaust gas in the first piping in the heat exchange unit flows downward, and in such a manner that the anode exhaust gas in the second piping in the heat exchange unit flows upward.

5. The fuel cell system according to any one of claims 1 to 4, wherein the fuel cell and the combustor are located above the vapor-liquid separator,
the heat exchange unit is located above the vapor-liquid separator, and
the anode exhaust gas heat exchanger is located above the vapor-liquid separator and below the heat exchange unit.

6. The fuel cell system according to any one of claims 1 to 5, wherein the exhaust heat recovery passage is configured in such a manner that the exhaust heat recovery medium circulates in at least one of the anode exhaust gas heat exchanger and the flue gas heat exchanger and a hot water storage tank, and
the anode exhaust gas heat exchanger and the flue gas heat exchanger are connected in parallel with each other in the exhaust heat recovery passage.

7. The fuel cell system according to any one of claims 1 to 6, further comprising a reformer that generates the hydrogen-containing gas by reaction of a raw material and water while heated by heat generated by the combustor.
